# EUROPÄISCHE PATENTSCHRIFT

(11) **EP 3 757 565 B1**
(45) Veröffentlichungstag und Bekanntmachung des Hinweises auf die Patenterteilung: **16.08.2023**
(21) Anmeldenummer: 19000307.9
(22) Anmeldetag: 26.06.2019
(51) Int. Cl.: G01N 30/88

(54) **VORRICHTUNG ZUR BESCHAFFENHEITSMESSUNG EINES IN EINER GASLEITUNG STRÖMENDEN GASES**
DEVICE FOR MEASURING THE QUALITY OF A GAS FLOWING IN A GAS LINE
DISPOSITIF DE MESURE D'ÉTAT D'UN GAZ CIRCULANT DANS UNE CONDUITE DE GAZ

(43) Veröffentlichungstag der Anmeldung: 30.12.2020
(73) Patentinhaber: Meter-Q Solutions GmbH, 35510 Butzbach (DE)
(72) Erfinder: Zajc, Achim, 35510 Butzbach (DE); Körte, Jost, 65366 Geisenheim (DE)
(74) Vertreter: Heeschen Pültz Patentanwälte PartGmbB

(56) Entgegenhaltungen:
- WO-A1-2004/083848
- CN-A- 103 472 180
- DE-A1-102010 050 327
- DE-U1-202017 005 215
- US-B1- 6 386 014
- US-B1- 6 539 312
- Gerhard Wiegleb: "Separationsverfahren" In: "Gasmesstechnik in Theorie und Praxis Chapter 5", 1. März 2016 (2016-03-01), Springer Fachmedien Wiesbaden, Wiesbaden, XP055650527, ISBN: 978-3-658-10687-4 Seiten 279-327, DOI: 10.1007/978-3-658-10687-4_5, * Abbildung 5.18 *

## Beschreibung

Die vorliegende Erfindung betrifft eine Vorrichtung zur Beschaffenheitsmessung eines in einer Gasleitung strömenden Gases, insbesondere zur Beschaffenheitsmessung von einem in einem Gasnetz strömenden Gas. Ferner betrifft die Erfindung eine Anordnung umfassend eine Vorrichtung zur Beschaffenheitsmessung eines in einer Gasleitung strömenden Gases und umfassend eine Gasleitung.

Insbesondere bei Erdgasnetzen ist es durch die Einspeisung von Biogas in das bestehende Erdgasnetz sowie Power-to-Gas-Ansätzen, die überschüssigen Strom aus erneuerbaren Energien in Wasserstoff umwandeln und dieses direkt oder über das Verfahren der Methanisierung in Form von Methan in das Erdgasnetz einspeisen, notwendig, die Dichte an Messpunkten, an welchen eine Beschaffenheitsmessung des in der Gasleitung strömenden Gases durchgeführt wird, zu erhöhen.

Typischerweise erfolgt die Beschaffenheitsmessung eines in einer Gasleitung strömenden Gases mittels eines Gaschromatographen, bei Erdgasnetzen in der Regel in Form eines Prozessgaschromatographen, wobei bei klassischen Installationen eine Peripherieeinrichtung umfassend eine komplexe und große Apparatur mit Entnahmesonde, Druckreduzierung, beheizter Leitung, Filterung, Umschalteinheiten, Prozessgaschromatograph, Entlüftung und Abgasleitungen notwendig ist. In der Regel wird für derartige Peripherieeinrichtungen noch ein Gebäude vorgesehen. Damit einher gehen ein hoher Platzbedarf und hohe Investitionskosten. Bei dem vorgenannten klassischen Aufbau bzw. klassischen Installationen entstehen aufgrund des großen Totvolumens innerhalb der notwendigen Leitungen und Einrichtungen im hohen Maße Emissionen von Erdgas, insbesondere von Methan, in die Umwelt. Zudem ist es in der Regel notwendig, die Leitungen für das entnommene Gas zumindest teilweise zu beheizen.

Aus dem Stand der Technik sind auch Vorrichtungen zur Beschaffenheitsmessung eines in einer Gasleitung strömenden Gases bekannt, die einen geringeren Platzbedarf und ein geringes Totvolumen aufweisen, als die vorgenannten klassischen Installationen. So ist aus dem Lehrbuch "Gasmesstechnik in Theorie und Praxis: Messgeräte, Sensoren, Anwendungen" von Gerhard Wiegleb (Ausgabe 2016), Abb. 5.18, eine Vorrichtung zur Beschaffenheitsmessung eines in einer Gasleitung strömenden Gases bekannt, die die Merkmale des Oberbegriffs des Patentanspruchs 1 aufweist. Die Abb. 5.18 zeigt eine Montage eines Prozesschromatographen (PGC1000) auf einer Gasleitung mit der dazugehörigen Gasversorgung (Trägergas und Prüfgas) und einer separaten Probennahme. Diese aus dem Stand der Technik bekannte Vorrichtung zur Beschaffenheitsmessung eines in einer Gasleitung strömenden Gases umfasst die folgenden Komponenten:
- eine Entnahmevorrichtung zur Entnahme und Weiterleitung des in der Gasleitung strömenden Gases, wobei die Entnahmevorrichtung eine in der Gasleitung anordenbare Entnahmesonde zum Entnehmen des in der Gasleitung strömenden Gases aufweist, wobei die Entnahmesonde eine Eingangsöffnung zum Einleiten des in der Gasleitung strömenden Gases und eine Leitung zum Weiterleiten des mittels der Entnahmesonde entnommenen Gases aufweist,
- eine Druckreduziervorrichtung zur Verringerung des Drucks des mittels der Leitung der Entnahmevorrichtung von der Entnahmevorrichtung zu der Druckreduziervorrichtung geleiteten Gases, wobei die Druckreduziervorrichtung eine Leitung zum Weiterleiten des druckreduzierten Gases aufweist,
- eine Messvorrichtung zur Messung der Beschaffenheit des mittels der Leitung der Druckreduziervorrichtung von der Druckreduziervorrichtung zur Messvorrichtung geleiteten Gases, wobei die Messvorrichtung einen Gaschromatographen und einen Einlass für ein Trägergas aufweist.

Ferner weist die Vorrichtung eine Lagereinrichtung auf, wobei die Lagereinrichtung mit der Gasleitung verbindbar ist.

Bei dieser bekannten Vorrichtung ist vorgesehen, dass die Probennahme, somit die Entnahmevorrichtung zur Entnahme und Weiterleitung des in der Gasleitung strömenden Gases, separat, d. h. räumlich getrennt von den übrigen Komponenten der Vorrichtung, mit der Gasleitung verbunden ist. Die übrigen Komponenten der Vorrichtung sind räumlich getrennt von der Entnahmevorrichtung ebenfalls mit der Gasleitung verbunden. Das mittels der Entnahmevorrichtung entnommene Gas wird daher über eine Leitung zu den weiteren Komponenten der Vorrichtung weitergeleitet, wobei diese Leitung eine Fluidverbindung zwischen der Entnahmevorrichtung und den weiteren Komponenten der Vorrichtung herstellt. Bei der aus dem Stand der Technik bekannten Vorrichtung ist somit vorgesehen, dass die Entnahmevorrichtung mittels einer Lageeinrichtung in der Gasleitung gelagert ist und die weiteren Komponenten mittels einer weiteren Lagereinrichtung räumlich getrennt von der Entnahmevorrichtung in der Gasleitung gelagert sind. Die beiden Lagereinrichtungen müssen daher jeweils mit der Gasleitung verbunden werden.

Weiterer Stand der Technik ist aus US 6 386 014 B1, WO 2004/083848 A1, CN 103 472 180 A, DE 20 2017 005215 U1, US 6 539 312 B1 und DE 10 2010 050327 A1 bekannt.

Aufgabe der vorliegenden Erfindung ist es, eine Vorrichtung zur Beschaffenheitsmessung eines in einer Gasleitung strömenden Gases, die die Merkmale des Oberbegriffs des Patentanspruchs 1 aufweist, derart weiterzubilden, dass der Platzbedarf und der Montageaufwand reduziert sind und zudem die Betriebssicherheit erhöht ist. Ferner ist es Aufgabe der vorliegenden Erfindung, eine vorteilhafte Anordnung umfassend eine Vorrichtung zur Beschaffenheitsmessung eines in einer Gasleitung strömenden Gases und umfassend eine Gasleitung anzugeben.

Diese Aufgabe wird durch eine Vorrichtung gelöst, die die Merkmale des Patentanspruchs 1 aufweist, ferner durch eine Anordnung, die die Merkmale des Patentanspruchs 11 aufweist. Vorteilhafte Ausführungsformen sind durch die abhängigen Ansprüche definiert.

Erfindungsgemäß ist vorgesehen, dass die Entnahmevorrichtung, die Druckreduziervorrichtung und die Messvorrichtung mittels der Lagereinrichtung gemeinsam in der Gasleitung lagerbar sind. Dadurch wird die Installation vereinfacht und der Platzbedarf der Vorrichtung reduziert, da die vorgenannten Komponenten der Vorrichtung mittels ein und derselben Lagereinrichtung an der Gasleitung lagerbar sind, sodass es lediglich notwendig ist, die Lagereinrichtung mit der Gasleitung zu verbinden, um auf diese Weise die Entnahmevorrichtung, die Druckreduziervorrichtung und die Messvorrichtung mit der Gasleitung zu verbinden. Somit ist es beispielsweise nicht notwendig mehrere Lagereinrichtungen mit der Gasleitung zu verbinden, um einzelne Komponenten der Vorrichtung in der Gasleitung zu lagern. Dadurch reduziert sich der Zeitaufwand der Installation vor Ort, d.h. bei der Gasleitung erheblich. Insbesondere bei schwer zugänglichen Gasleitungen oder unterirdisch verlegten Gasleitung ist die erfindungsgemäße Vorrichtung besonders vorteilhaft.

Als besonders vorteilhaft wird es angesehen, wenn die Entnahmevorrichtung, die Druckreduziervorrichtung und die Messvorrichtung bereits mit der Lagereinrichtung verbunden sind, sodass zur Installation der Vorrichtung an der Gasleitung lediglich die Lagereinrichtung mit der Gasleitung verbunden werden muss. Auf diese Weise kann die Vorrichtung bereits vorinstalliert werden und etwaige Installationsprüfungen, beispielsweise Dichtigkeitsprüfungen, vor der eigentlichen Installation der Vorrichtung an der Gasleitung vorgenommen werden.

Als besonders vorteilhaft wird es angesehen, wenn die Entnahmevorrichtung und/oder die Druckreduziervorrichtung und/oder die Messvorrichtung in der Lagereinrichtung gelagert sind.

Als besonders vorteilhaft wird es angesehen, wenn die Entnahmevorrichtung, die Druckreduziervorrichtung, die Messvorrichtung und die Lagereinrichtung mechanisch fest, insbesondere starr, miteinander verbunden sind.

In einer vorteilhaften Weiterbildung ist vorgesehen, dass die Entnahmevorrichtung und/oder die Druckreduziervorrichtung und/oder die Messvorrichtung lösbar in der Lagereinrichtung gelagert sind. Dadurch kann ein einfacher Austausch einer oder mehrerer der vorgenannten Komponenten vorgenommen werden.

In einer vorteilhaften Weiterbildung der Vorrichtung ist vorgesehen, dass die Entnahmevorrichtung und/oder die Druckreduziervorrichtung und/oder die Messvorrichtung unmittelbar in der Lagereinrichtung gelagert sind. Dadurch sind die einzelnen Komponenten besonders einfach zugänglich, was den Austausch oder die Wartung der Komponenten erleichtert.

In einer bevorzugten Ausführungsform der Vorrichtung ist vorgesehen, dass die Lagereinrichtung durch einen Teilbereich der Entnahmevorrichtung gebildet ist, insbesondere die Entnahmevorrichtung ein Gehäuse aufweist, wobei die Entnahmesonde in dem Gehäuse gelagert ist, wobei ein Teilbereich des Gehäuses der Entnahmevorrichtung die Lagereinrichtung bildet.

Die Druckreduziervorrichtung ist in der Entnahmevorrichtung gelagert und die Messvorrichtung ist wiederum in der Druckreduziervorrichtung gelagert.

Hinsichtlich einer besonders einfachen Verbindung der Vorrichtung mit der Gasleitung wird es als vorteilhaft angesehen, wenn die Lagereinrichtung einen Flansch aufweist.

Um die Positionierung der Entnahmesonde bezüglich der Gasleitung in einfacher Art und Weise anzupassen, wird es als vorteilhaft angesehen, wenn die Entnahmesonde bezüglich der Lagereinrichtung verschiebbar ist.

In einer vorteilhaften Weiterbildung ist vorgesehen, dass die Entnahmevorrichtung ein Gehäuse aufweist, wobei die Leitung der Entnahmevorrichtung als interne Leitung ausgebildet ist und/oder dass die Druckreduziervorrichtung ein Gehäuse aufweist, wobei die Leitung der Druckreduziervorrichtung als interne Leitung ausgebildet ist. Dadurch sind die Leitungen besonders einfach und effektiv vor äußeren Einflüssen geschützt, was die Betriebssicherheit erhöht und einen besonders langen Dauerbetrieb begünstigt. Eine interne Leitung kann beispielsweise als Bohrung ausgebildet sein.

Vorzugsweise ist der Gaschromatograph als Prozessgaschromatograph ausgebildet, wodurch eine kontinuierliche Beschaffenheitsmessung des in der Gasleitung strömenden Gases ermöglicht ist.

Um zu verhindern, dass für die Gasbeschaffenheitsmessung unerwünschte Stoffe in den Gaschromatographen gelangen, wird es als vorteilhaft angesehen, wenn die Druckreduziervorrichtung einen Koaleszenzfilter und/oder einen Partikelfilter aufweist, vorzugsweise der Koaleszenzfilter und/oder der Partikelfilter einem Druckregler der Druckreduziervorrichtung vorgelagert sind.

Als besonders vorteilhaft wird es angesehen, wenn die Messvorrichtung einen Einlass für ein Kalibriergas aufweist.

Um einen möglichst autarken Betrieb der Vorrichtung zu ermöglichen, wird es als vorteilhaft angesehen, wenn die Vorrichtung eine Gasversorgungseinrichtung zur Bereitstellung des Trägergases aufweist, wobei diese Gasversorgungseinrichtung mit dem Einlass für das Trägergas fluidverbunden ist und/oder die Vorrichtung eine Gasversorgungseinrichtung zur Bereitstellung des Kalibriergases aufweist, wobei diese Gasversorgungseinrichtung mit dem Einlass für das Kalibriergas fluidverbunden ist.

Die erfindungsgemäße Anordnung umfasst eine Vorrichtung nach einem der Ansprüche 1 bis 11 und eine Gasleitung, wobei die Lagereinrichtung mit der Gasleitung verbunden ist, vorzugsweise mechanisch fest, insbesondere starr, verbunden ist, wobei die Entnahmesonde innerhalb der Gasleitung angeordnet ist.

Hinsichtlich einer besonders einfachen Installation der Vorrichtung an der Gasleitung wird es als vorteilhaft angesehen, wenn die Lagereinrichtung lösbar mit der Gasleitung verbunden ist, beispielsweise mit dieser verschraubt ist.

Als besonders vorteilhaft wird es angesehen, wenn die Gasleitung, vorzugsweise im Bereich einer in den Innenraum der Gasleitung mündenden Zugangsöffnung, einen Flansch aufweist, wobei die Lagereinrichtung einen Flansch aufweist, wobei der Flansch der Gasleitung mit dem Flansch der Lagereinrichtung verbunden ist.

Durch die erfindungsgemäße Vorrichtung bzw. die erfindungsgemäße Anordnung der Vorrichtung und einer Gasleitung ist eine kompakte, integrierte Installation geschaffen, die direkt auf der Gasleitung installiert werden kann, wobei der Platzbedarf und der Montageaufwand besonders gering ist. Aufgrund der Platzeinsparung und der einfachen Installation entstehen erhebliche Vorteile:
Aufgrund der kompakten Anordnung der Komponenten kann auf eine beheizte Entnahmeleitung verzichtet werden. Die Anzahl von dichtigkeitsrelevanten Verschraubungen ist gering. Ferner kann die Vorrichtung annähernd vollständig vorinstalliert werden, sodass die notwendigen Montagearbeiten am Installationsort der Vorrichtung an der Gasleitung verringert sind. Zudem können die Dichtigkeitsprüfungen und die Funktionsprüfungen bereits vor dem Verbinden der Vorrichtung mit der Gasleitung durchgeführt werden. Aufgrund der Kompaktheit der Vorrichtung ist das Totvolumen gering, wodurch sich die Menge von zu entnehmendem Gas reduziert, wodurch unter anderem die Emissionen von dem zu prüfenden Gas erheblich reduziert sind. Aufgrund der Kompaktheit der Vorrichtung sind Retentionszeiten, d. h. Verzögerungen in der Zuführung des mittels der Entnahmevorrichtung entnommenen Gases bis zur Gasbeschaffenheitsmessung in dem Gaschromatographen, reduziert.

In den folgenden Figuren wird die Erfindung anhand eines bevorzugten Ausführungsbeispiels näher erläutert, ohne hierauf beschränkt zu sein. Es zeigen:
- Fig. 1: eine Vorrichtung zur Beschaffenheitsmessung eines in einer Gasleitung strömenden Gases,
- Fig. 2: eine Anordnung, umfassend eine Vorrichtung gemäß Fig. 1 und umfassend eine Gasleitung.

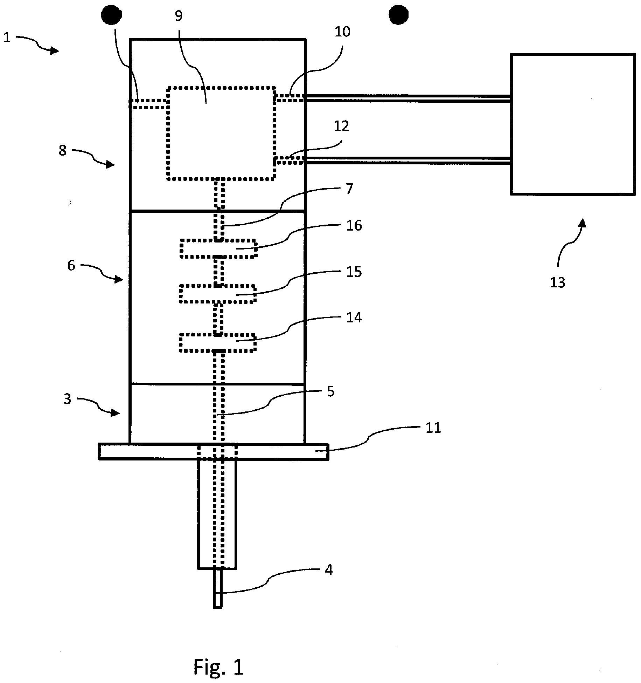

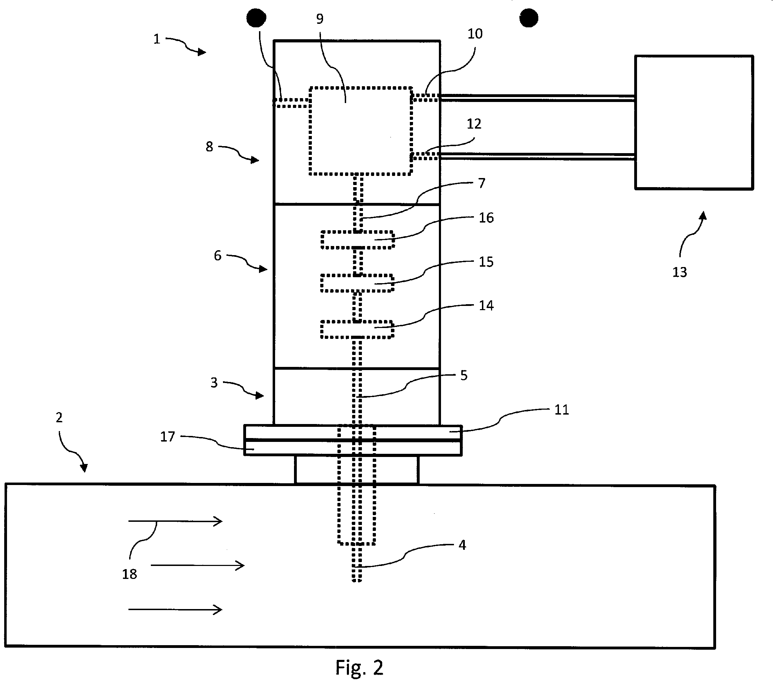

Die in den Fig. 1 und 2 dargestellte Vorrichtung 1 dient der Beschaffenheitsmessung eines in einer Gasleitung 2 strömenden Gases. Die Strömungsrichtung des Gases in der Gasleitung 2 ist durch die Pfeile 18 kenntlich gemacht. Die Vorrichtung 1 weist eine Entnahmevorrichtung 3 zur Entnahme und Weiterleitung des in der Gasleitung 2 strömenden Gases auf. Die Entnahmevorrichtung 3 umfasst eine in der Gasleitung 2 anordenbare Entnahmesonde 4 zum Entnehmen des in der Gasleitung 2 strömenden Gases. Die Entnahmesonde 4 weist eine Eingangsöffnung zum Einleiten des in der Gasleitung 2 strömenden Gases und eine Leitung 5 zum Weiterleiten des mittels der Entnahmesonde 4 entnommenen Gases auf.

An die Entnahmevorrichtung 3 schließt sich eine Druckreduziervorrichtung 6 zur Verringerung des Drucks des mittels der Leitung 5 von der Entnahmevorrichtung 3 zu der Druckreduziervorrichtung 6 geleiteten Gases an. Die Druckreduziervorrichtung 6 ist dabei mechanisch fest mit der Entnahmevorrichtung 3 verbunden. Die Druckreduziervorrichtung 6 umfasst in Strömungsrichtung des entnommenen Gases aufeinanderfolgend einen Koaleszenzfilter 14, einen Partikelfilter 15 und einen Druckregler 16 zur Druckreduzierung. Ferner weist die Druckreduziervorrichtung 6 eine Leitung 7 zum Weiterleiten des druckreduzierten Gases auf.

An die Druckreduziervorrichtung 6 schließt sich eine Messvorrichtung 8 zur Messung der Beschaffenheit des mittels der Leitung 7 von der Druckreduziervorrichtung 6 zur Messvorrichtung 8 geleiteten Gases an. Die Messvorrichtung 8 umfasst einen Gaschromatographen 9, einen Einlass 10 für ein Trägergas, einen Einlass 12 für ein Kalibriergas sowie einen Auslass 19 für das der Messvorrichtung 8 zugeführte Gas bzw. Trägergas bzw. Kalibriergas. Ferner umfasst die Vorrichtung 1 eine Gasversorgungseinrichtung 13 zur Bereitstellung des Trägergases und des Kalibriergases, wobei die Gasversorgungseinrichtung 13 sowohl mit dem Einlass 10 für das Trägergas als auch mit dem Einlass 12 für das Kalibriergas fluidverbunden ist.

Die jeweilige Leitung 5, 7 ist vorliegend als interne Leitung ausgebildet.

Die Vorrichtung 1 umfasst eine Lagereinrichtung 11, wobei die Entnahmevorrichtung 3, die Druckreduziervorrichtung 6 und die Messvorrichtung 8 in der Lagereinrichtung 11 gelagert sind, vorliegend mechanisch fest mit dieser bzw. untereinander verbunden sind. Vorliegend ist die Entnahmevorrichtung 3 unmittelbar in der Lagereinrichtung 11 gelagert, wobei die Druckreduziervorrichtung 6 wiederum in der Entnahmevorrichtung 3 gelagert ist und die Messvorrichtung 8 wiederum in der Druckreduziervorrichtung 6 gelagert ist, wodurch sich ein turmartiger Aufbau der vorgenannten Komponenten ergibt. Die Entnahmevorrichtung 3, die Druckreduziervorrichtung 6, die Messvorrichtung 8 und die Lagereinrichtung 11 sind vorliegend mechanisch fest miteinander verbunden.

Mittels der Lagereinrichtung 11 sind die Entnahmevorrichtung 3, die Druckreduziervorrichtung 6 und die Messvorrichtung 8, welche in der Lagereinrichtung 11 gelagert sind, in der Gasleitung 2 lagerbar. Vorliegend weist die Lagereinrichtung 11 einen Flansch auf, wobei die Gasleitung 2 ebenfalls einen Flansch 17 aufweist, wobei der Flansch 17 der Gasleitung 2 mit dem Flansch der Lagereinrichtung 11 verbindbar bzw. verbunden ist, wie sich dies insbesondere aus der Fig. 2 ergibt. Vorliegend ist der Flansch 17 der Gasleitung 2 im Bereich einer Zugangsöffnung der Gasleitung 2 ausgebildet, wobei die Entnahmesonde 4 durch diese Zugangsöffnung hindurch in die Gasleitung 2 eingebracht ist.

### Bezugszeichenliste

- 1: Vorrichtung
- 2: Gasleitung
- 3: Entnahmevorrichtung
- 4: Entnahmesonde
- 5: Leitung
- 6: Druckreduziervorrichtung
- 7: Leitung
- 8: Messvorrichtung
- 9: Gaschromatograph
- 10: Einlass
- 11: Lagereinrichtung
- 12: Einlass
- 13: Gasversorgungseinrichtung
- 14: Koaleszenzfilter
- 15: Partikelfilter
- 16: Druckregler
- 17: Flansch
- 18: Pfeil
- 19: Auslass

## Patentansprüche

1. Vorrichtung (1) zur Beschaffenheitsmessung eines in einer Gasleitung (2) strömenden Gases umfassend:
- eine Entnahmevorrichtung (3) zur Entnahme und Weiterleitung des in der Gasleitung (2) strömenden Gases, wobei die Entnahmevorrichtung (3) eine in der Gasleitung (2) anordenbare Entnahmesonde (4) zum Entnehmen des in der Gasleitung (2) strömenden Gas aufweist, wobei die Entnahmesonde (4) eine Eingangsöffnung zum Einleiten des in der Gasleitung (2) strömenden Gases und eine Leitung (5) zum Weiterleiten des mittels der Entnahmesonde (4) entnommenen Gases aufweist,
- eine Druckreduziervorrichtung (6) zur Verringerung des Drucks des mittels der Leitung (5) der Entnahmevorrichtung (3) von der Entnahmevorrichtung (3) zu der Druckreduziervorrichtung (6) geleiteten Gases, wobei die Druckreduziervorrichtung (6) eine Leitung (7) zum Weiterleiten des druckreduzierten Gases aufweist,
- eine Messvorrichtung (8) zur Messung der Beschaffenheit des mittels der Leitung (7) der Druckreduziervorrichtung (6) von der Druckreduziervorrichtung (6) zur Messvorrichtung (8) geleiteten Gases, wobei die Messvorrichtung (8) einen Gaschromatograph (9) und einen Einlass (10) für ein Trägergas aufweist,
- eine Lagereinrichtung (11), wobei die Lagereinrichtung (11) mit der Gasleitung (2) verbindbar ist,
**dadurch gekennzeichnet, dass**
die Entnahmevorrichtung (3), die Druckreduziervorrichtung (6) und die Messvorrichtung (8) mittels der Lagereinrichtung (11) gemeinsam in oder an der Gasleitung (2) lagerbar sind,
wobei die Druckreduziervorrichtung (6) in der Entnahmevorrichtung (3) gelagert ist und die Messvorrichtung (8) in der Druckreduziervorrichtung (6) gelagert ist.

2. Vorrichtung (1) nach Anspruch 1, wobei die Entnahmevorrichtung (3) in der Lagereinrichtung (11) gelagert ist.

3. Vorrichtung (1) nach Anspruch 2, wobei die Entnahmevorrichtung (3) lösbar in der Lagereinrichtung (11) gelagert ist.

4. Vorrichtung (1) nach einem der Ansprüche 1 bis 3, wobei die Entnahmevorrichtung (3) unmittelbar in der Lagereinrichtung (11) gelagert ist.

5. Vorrichtung (1) nach einem der Ansprüche 1 bis 3, wobei die Entnahmevorrichtung (3) ein Gehäuse aufweist, wobei die Entnahmesonde (4) in dem Gehäuse gelagert ist, wobei ein Teilbereich des Gehäuses der Entnahmevorrichtung (3) die Lagereinrichtung (11) bildet.

6. Vorrichtung (1) nach einem der Ansprüche 1 bis 5, wobei die Lagereinrichtung (11) einen Flansch aufweist.

7. Vorrichtung (1) nach einem der Ansprüche 1 bis 6, wobei die Entnahmevorrichtung (3) ein Gehäuse aufweist, wobei die Leitung (5) der Entnahmevorrichtung (3) als interne Leitung ausgebildet ist und/oder wobei die Druckreduziervorrichtung (6) ein Gehäuse aufweist, wobei die Leitung (7) der Druckreduziervorrichtung (6) als interne Leitung ausgebildet ist.

8. Vorrichtung (1) nach einem der Ansprüche 1 bis 7, wobei die Druckreduziervorrichtung (6) einen Koaleszenzfilter (14) und/oder einen Partikelfilter (15) aufweist, vorzugsweise der Koaleszenzfilter (14) und/oder der Partikelfilter (15) einem Druckregler (16) der Druckreduziervorrichtung (6) vorgelagert sind.

9. Vorrichtung (1) nach einem der Ansprüche 1 bis 8, wobei die Messvorrichtung (8) einen Einlass (12) für ein Kalibriergas aufweist.

10. Vorrichtung (1) nach einem der Ansprüche 1 bis 9, wobei die Vorrichtung (1) eine Gasversorgungseinrichtung (13) zur Bereitstellung des Trägergases aufweist, wobei diese Gasversorgungseinrichtung (13) mit dem Einlass (10) für das Trägergas fluidverbunden ist und/oder die Vorrichtung (1) eine Gasversorgungseinrichtung (13) zur Bereitstellung des Kalibriergases aufweist, wobei diese Gasversorgungseinrichtung (13) mit dem Einlass (12) für das Kalibriergas fluidverbunden ist.

11. Anordnung umfassend eine Vorrichtung (1) nach einem der Ansprüche 1 bis 10 und umfassend eine Gasleitung (2), wobei die Lagereinrichtung (11) mit der Gasleitung (2) verbunden ist, wobei die Entnahmesonde (4) innerhalb der Gasleitung (2) angeordnet ist.

12. Anordnung nach Anspruch 11, wobei die Lagereinrichtung (11) lösbar mit der Gasleitung (2) verbunden ist.

13. Anordnung nach Anspruch 11 oder 12, wobei die Gasleitung (2) einen Flansch (17) aufweist, wobei die Lagereinrichtung (11) einen Flansch aufweist, wobei der Flansch (17) der Gasleitung (2) mit dem Flansch der Lagereinrichtung (11) verbunden ist.

## Claims

1. Device (1) for measuring the quality of a gas flowing in a gas line (2) comprising:
- an extraction device (3) for extracting and forwarding the gas flowing in the gas line (2), the extraction device (3) having an extraction probe (4) arrangable in the gas line (2) for extracting the gas flowing in the gas line (2), the extraction probe (4) having an inlet opening for introducing the gas flowing in the gas line (2) and a line (5) for forwarding the gas extracted by means of the extraction probe (4),
- a pressure reducing device (6) for reducing the pressure of the gas forwarded by means of the line (5) of the extraction device (3) from the extraction device (3) to the pressure reducing device (6), the pressure reducing device (6) having a line (7) for forwarding the pressure-reduced gas,
- a measuring device (8) for measuring the quality of the gas forwarded by means of the line (7) of the pressure reducing device (6) from the pressure reducing device (6) to the measuring device (8), the measuring device (8) comprising a gas chromatograph (9) and an inlet (10) for a carrier gas,
- a bearing device (11), wherein the bearing device (11) is connectable to the gas line (2),
**characterized in that**
the extraction device (3), the pressure reducing device (6) and the measuring device (8) are mountable together in or on the gas line (2) by means of the bearing device (11),
wherein the pressure reducing device (6) is mounted in the extraction device (3) and the measuring device (8) is mounted in the pressure reducing device (6).

2. Device (1) according to claim 1, wherein the extraction device (3) is mounted in the bearing device (11).

3. Device (1) according to claim 2, wherein the extraction device (3) is detachably mounted in the bearing device (11).

4. Device (1) according to any one of claims 1 to 3, wherein the extraction device (3) is directly mounted in the bearing device (11).

5. Device (1) according to any one of claims 1 to 3, wherein the extraction device (3) comprises a housing, wherein the extraction probe (4) is mounted in the housing, wherein a partial area of the housing of the extraction device (3) forms the bearing device (11).

6. Device (1) according to any one of claims 1 to 5, wherein the bearing device (11) comprises a flange.

7. Device (1) according to any one of claims 1 to 6, wherein the extraction device (3) has a housing, wherein the line (5) of the extraction device (3) is configured as an internal line and/or wherein the pressure reducing device (6) has a housing, wherein the line (7) of the pressure reducing device (6) is configured as an internal line.

8. Device (1) according to any one of claims 1 to 7, wherein the pressure reducing device (6) comprises a coalescence filter (14) and/or a particle filter (15), preferably the coalescence filter (14) and/or the particle filter (15) are arranged upstream of a pressure regulator (16) of the pressure reducing device (6).

9. Device (1) according to any one of claims 1 to 8, wherein the measuring device (8) has an inlet (12) for a calibration gas.

10. Device (1) according to any one of claims 1 to 9, wherein the device (1) has a gas supply device (13) for providing the carrier gas, wherein the gas supply device (13) is fluid-connected to the inlet (10) for the carrier gas and/or the device (1) has a gas supply device (13) for providing the calibration gas, wherein this gas supply device (13) is fluid-connected to the inlet (12) for the calibration gas.

11. Arrangement comprising a device (1) according to any one of claims 1 to 10 and comprising a gas line (2), wherein the bearing device (11) is connected to the gas line (2), wherein the extraction probe (4) is arranged within the gas line (2).

12. Arrangement according to claim 11, wherein the bearing device (11) is detachably connected to the gas line (2).

13. Arrangement according to claim 11 or 12, wherein the gas line (2) comprises a flange (17), wherein the bearing device (11) comprises a flange, wherein the flange (17) of the gas line (2) is connected to the flange of the bearing device (11).

## Revendications

1. Dispositif (1) pour la mesure de la qualité d'un gaz circulant dans une conduite de gaz (2), comprenant :
- un dispositif de prélèvement (3) pour le prélèvement et la transmission du gaz circulant dans la conduite de gaz (2), le dispositif de prélèvement (3) présentant une sonde de prélèvement (4) pouvant être disposée dans la conduite de gaz (2) pour prélever le gaz circulant dans la conduite de gaz (2), la sonde de prélèvement (4) présentant un orifice d'entrée pour l'introduction du gaz circulant dans la conduite de gaz (2) et une conduite (5) pour la transmission du gaz prélevé au moyen de la sonde de prélèvement (4),
- un dispositif de réduction de la pression (6) pour réduire la pression du gaz acheminé au moyen de la conduite (5) du dispositif de prélèvement (3) depuis le dispositif de prélèvement (3) jusqu'au dispositif de réduction de la pression (6), le dispositif de réduction de la pression (6) présentant une conduite (7) pour acheminer le gaz à pression réduite,
- un dispositif de mesure (8) pour mesurer la qualité du gaz acheminé du dispositif de réduction de la pression (6) au dispositif de mesure (8) au moyen de la conduite (7) du dispositif de réduction de la pression (6), le dispositif de mesure (8) présentant un chromatographe en phase gazeuse (9) et une entrée (10) pour un gaz porteur,
- un dispositif de stockage (11), le dispositif de stockage (11) pouvant être relié à la conduite de gaz (2),
**caractérisé en ce que**
le dispositif de prélèvement (3), le dispositif de réduction de la pression (6) et le dispositif de mesure (8) peuvent être montés ensemble dans ou sur la conduite de gaz (2) au moyen du dispositif de stockage (11),
le dispositif de réduction de la pression (6) étant monté dans le dispositif de prélèvement (3) et le dispositif de mesure (8) étant monté dans le dispositif de réduction de la pression (6).

2. Dispositif (1) selon la revendication 1, dans lequel le dispositif de prélèvement (3) est logé dans le dispositif de stockage (11).

3. Dispositif (1) selon la revendication 2, dans lequel le dispositif de prélèvement (3) est monté de manière amovible dans le dispositif de stockage (11).

4. Dispositif (1) selon l'une des revendications 1 à 3, dans lequel le dispositif de prélèvement (3) est directement logé dans le dispositif de stockage (11).

5. Dispositif (1) selon l'une des revendications 1 à 3, dans lequel le dispositif de prélèvement (3) présente un boîtier, la sonde de prélèvement (4) étant montée dans le boîtier, une partie du boîtier du dispositif de prélèvement (3) formant le dispositif de stockage (11).

6. Dispositif (1) selon l'une des revendications 1 à 5, dans lequel le dispositif de stockage (11) présente une bride.

7. Dispositif (1) selon l'une des revendications 1 à 6, dans lequel le dispositif de prélèvement (3) présente un boîtier, la conduite (5) du dispositif de prélèvement (3) étant réalisée sous forme de conduite interne et/ou dans lequel le dispositif de réduction de la pression (6) présente un boîtier, la conduite (7) du dispositif de réduction de la pression (6) étant réalisée sous forme de conduite interne.

8. Dispositif (1) selon l'une des revendications 1 à 7, dans lequel le dispositif de réduction de la pression (6) comporte un filtre à coalescence (14) et/ou un filtre à particules (15), le filtre à coalescence (14) et/ou le filtre à particules (15) étant de préférence montés en amont d'un régulateur de pression (16) du dispositif de réduction de la pression (6).

9. Dispositif (1) selon l'une des revendications 1 à 8, dans lequel le dispositif de mesure (8) présente une entrée (12) pour un gaz d'étalonnage.

10. Dispositif (1) selon l'une des revendications 1 à 9, dans lequel le dispositif (1) présente un dispositif d'alimentation en gaz (13) pour la mise à disposition du gaz porteur, ce dispositif d'alimentation en gaz (13) étant en communication fluidique avec l'entrée (10) pour le gaz porteur et/ou le dispositif (1) présentant un dispositif d'alimentation en gaz (13) pour la mise à disposition du gaz d'étalonnage, ce dispositif d'alimentation en gaz (13) étant en communication fluidique avec l'entrée (12) pour le gaz d'étalonnage.

11. Ensemble comprenant un dispositif (1) selon l'une des revendications 1 à 10 et comprenant une conduite de gaz (2), le dispositif de stockage (11) étant relié à la conduite de gaz (2), la sonde de prélèvement (4) étant disposée à l'intérieur de la conduite de gaz (2).

12. Ensemble selon la revendication 11, le dispositif de stockage (11) étant relié de manière amovible à la conduite de gaz (2).

13. Ensemble selon la revendication 11 ou 12, la conduite de gaz (2) présentant une bride (17), le dispositif de stockage (11) présentant une bride, la bride (17) de la conduite de gaz (2) étant reliée à la bride du dispositif de stockage (11).
